# EUROPÄISCHE PATENTSCHRIFT

(11) **EP 1 385 046 B1**
(45) Veröffentlichungstag und Bekanntmachung des Hinweises auf die Patenterteilung: **24.05.2006**
(21) Anmeldenummer: 03016248.1
(22) Anmeldetag: 17.07.2003
(51) Int. Cl.: G03B 27/73, H04N 1/60, H04N 1/46

(54) **Prüfvorrichtung und Prüfverfahren für einen Drucker**
Testing device and testing method for a printer
Méthode de contrôle et dispositif de contrôle pour une imprimante

(30) Priorität: 26.07.2002 DE 10234140
(43) Veröffentlichungstag der Anmeldung: 28.01.2004
(73) Patentinhaber: ARNOLD & RICHTER CINE TECHNIK GMBH & CO. BETRIEBS KG, 80799 München (DE)
(72) Erfinder: Kiening, Hans jun., 83661 Lenggries (DE)
(74) Vertreter: Manitz, Finsterwald & Partner GbR

(56) Entgegenhaltungen:
- EP-A- 0 265 362
- US-A- 4 187 435
- US-A- 5 760 913
- US-B1- 6 275 600
- US-B1- 6 327 047

## Beschreibung

Die Erfindung betrifft eine Prüfvorrichtung zum Prüfen der Belichtungsqualität eines belichteten Films, insbesondere eines Laufbildfilms. Die Erfindung betrifft ferner ein entsprechendes Prüfverfahren.

Hintergrund der Erfindung ist die Beurteilung der Qualität der Belichtung eines fotochemischen Films durch einen Filmrecorder, nachdem das mit einer Filmkamera ursprünglich aufgezeichnete Filmmaterial zum Zwecke der digitalen Nachbearbeitung (so genannte Postproduction) digitalisiert worden ist. Die aufgrund einer derartigen digitalen Nachbearbeitung gewonnenen digitalen Daten werden nämlich dazu verwendet, um mittels des Filmrecorders auf fotochemische Weise ein neues Filmoriginal zu belichten, das nachfolgend als Kopiervorlage zur Erzeugung von Filmkopien dient.

Für die Belichtung in einem derartigen Filmrecorder existieren im Wesentlichen zwei verschiedene Technologien: Ein so genannter CRT-Recorder (Cathode Ray Tube) besitzt einen hochauflösenden Monitor, der über einen Digital/Analog-Wandler mit den neu aufzuzeichnenden digitalen Daten gespeist wird, sowie einen Kamerakopf, der den Monitor auf eine Filmbühne bzw. einen darin eingelegten fotochemischen Film abbildet; Dabei werden mittels eines dazwischen angeordneten Filterrads die drei Primärfarben Rot, Grün und Blau nacheinander aufgezeichnet. Demgegenüber wird bei dem neueren Belichtungsprinzip eines Laserrecorders für die Farben Rot, Grün und Blau die Intensität des Sendestrahls eines jeweiligen Festkörperlasers mittels akusto-optischer Modulatoren moduliert; der aus diesen drei Teilstrahlen kombinierte Strahl wird über ein rotierendes Prisma zeilenweise auf den zu belichteten Film abgelenkt.

Die Überprüfung der Belichtungsqualität eines derartigen Filmrecorders erfolgte bislang auf vielfältige und aufwändige Weise. Um verschiedene geometrische und fotometrische Qualitätsparameter zu überprüfen, wurde der belichtete Film beispielsweise durch ein Spezialmikroskop mit einer 100-fachen Vergrößerung sowie mittels eines Densitometers untersucht, das für die drei Primärfarben die jeweilige optische Dichte bestimmt. Für eine erhöhte räumliche Auflösung wurde zusätzlich ein Mikrofotometer eingesetzt.

Diese bekannten Prüfmaßnahmen erfordern aufwändige und schwere Untersuchungsinstrumente sowie hochqualifiziertes Fachpersonal. Sie ermöglichen somit zwar eine Qualitätskontrolle vor Auslieferung eines neu hergestellten Filmrecorders. Allerdings ist eine regelmäßige oder im Servicefall erforderliche Kontrolle der Belichtungsqualität eines bereits an den Anwender ausgelieferten Filmrecorders unerwünscht aufwändig, da alle erforderlichen Untersuchungsinstrumente an den Betriebsort des Filmrecorders gebracht werden müssen. Auch ermöglichen die bislang angewendeten Prüfmaßnahmen nicht ohne weiteres einen objektiven Vergleich der jeweiligen Belichtungsqualität von unterschiedlichen Filmrecordern.

Die EP 0 265 362 A2 beschreibt einen Scanner zum Scannen von zweidimensionalen Farbbildern.

Aus der US 6,327,047 B 1 ist es bekannt, einen Scanner mittels eines Kalibrierstreifens zu kalibrieren. Ferner ist das Kalibrieren eines Druckers beschrieben.

Die US 5,760, 913 beschreibt ein Verfahren und ein System zum Kalibrieren eines Druckers.

Aus der US 4,187,435 ist eine Vorrichtung zur Bildanalyse bekannt.

Aus der US 6,275,600 B1 ist es bekannt, die Charakteristik eines gedruckten Bilds anhand eines Testmusters zu bestimmen, indem das ausgedruckte Bild eingescannt wird.

Es ist daher eine Aufgabe der Erfindung, eine Prüfvorrichtung zum Prüfen der Belichtungsqualität eines Filmrecorders zu schaffen, die leicht zu bedienen ist, einen einfachen Aufbau besitzt und standardisierte Qualitätsparameter zu überprüfen vermag, um die Belichtungseigenschaften des Filmrecorders charakterisieren zu können. Ferner soll ein entsprechendes Prüfverfahren geschaffen werden. Insbesondere sollen diese Prüfvorrichtung und dieses Prüfverfahren für die Prüfung der Belichtungsqualität der eingangs erläuterten Laserrecorder geeignet sein.

Diese Aufgabe wird durch eine Prüfvorrichtung mit den Merkmalen des Anspruchs 1 gelöst.

Die erfindungsgemäße Prüfvorrichtung besitzt also einen Lichtempfänger, der eine Bildinformation aufzeichnet, die sowohl von dem zu untersuchenden Prüfbild als auch von einem Referenzbild stammt, das bezüglich des Lichtstrahlengangs des Lichtsenders mit dem Prüfbild überlagert ist. Dieses Referenzbild ist mit einer, vorzugsweise mehreren Referenzmarken versehen, die zum einen als Grundlage für die Beurteilung der Belichtungsqualität des Prüfbilds dienen und zum anderen Rückschlüsse auf die Aufzeichnungsqualität der Prüfvorrichtung selbst zulassen. Beispielsweise dienen die Referenzmarken als Bezugsgrößen für die Lage oder die Belichtungsintensität des Prüfbilds, oder für die Kontrolle der Linearität der vom Lichtempfänger der Prüfvorrichtung erzeugten Empfangssignale. Eine Beurteilung des belichteten Prüfbilds kann dabei besonders gut erfolgen, wenn auch dieses einen vorbestimmten Aufbau besitzt und mit vorbestimmten Prüfmarken versehen ist.

Die zusätzliche Berücksichtigung eines Referenzbilds mit einer oder mehreren Referenzmarken gestattet es, die Untersuchung des eigentlichen Prüfbilds anhand von digitalisierten Empfangssignalen durchzuführen, da die dem Prüfbild überlagerten Referenzmarken geometrische Bezugspunkte bilden. Durch Digitalisierung der Empfangssignale kann die Auswertung leicht automatisch, anhand von vorbestimmten Qualitätsparametern erfolgen.

Die erfindungsgemäße Prüfvorrichtung kann für die Beurteilung mehrerer unterschiedlicher geometrischer und fotometrischer Qualitätsparameter verwendet werden, und sie besitzt dennoch einen einfachen und leichten Aufbau. Somit müssen nicht in jedem Servicefall aufwändige und schwere Untersuchungsinstrumente an den Betriebsort des betreffenden Filmrecorders gebracht werden.

Die erfindungsgemäße Prüfvorrichtung kann in vorteilhafter Weise im Wesentlichen den Aufbau eines herkömmlichen Digitalscanners besitzen, der zusätzlich mit dem erläuterten Referenzbild ausgestattet ist. Die Prüfvorrichtung kann somit vergleichsweise kostengünstig hergestellt werden. Dadurch kann jeder Anwender eines Filmrecorders leicht eine eigene derartige Prüfvorrichtung besitzen, um regelmäßig oder im besonderen Bedarfsfall die Belichtungsqualität des Filmrecorders zu überprüfen.

Ein weiterer Vorteil der Erfindung besteht darin, dass aufgrund der vorbekannten Referenzmarken des Referenzbilds stets - also für mehrmalige Messungen an demselben Filmrecorder oder für die Begutachtung unterschiedlicher Filmrecorder - objektive Qualitätskriterien überprüft werden können. Das erfindungsgemäße Prüfverfahren kann somit als Grundlage für eine standardisierte Qualitätsprüfung dienen.

Aufgrund derartig standardisierter Qualitätskriterien kann - wie erwähnt - auch die eigentliche Auswertung der ermittelten Empfangssignale automatisiert erfolgen, so dass für die Bedienung der Prüfvorrichtung kein speziell ausgebildetes Fachpersonal erforderlich ist, sondern stattdessen "auf Knopfdruck" ein standardisiertes Prüfprotokoll erstellt werden kann.

Es ist von Vorteil, wenn das Referenzbild und das in die Prüfbildhalterung aufgenommene Prüfbild stets dieselbe vorbestimmte Relativlage zueinander einnehmen. Dadurch ist nämlich gewährleistet, dass jede Referenzmarke des Referenzbilds stets dieselbe Relativanordnung zu dem Prüfbild oder zu hieran vorhandenen Prüfmarken besitzt. Dadurch können geometrische Qualitätsparameter besonders gut überprüft werden.

Es ist beispielsweise möglich, dass die Prüfbildhalterung mit wenigstens zwei Sperrgreiferstiften versehen ist, durch die das Prüfbild - oder das Referenzbild, oder beide - in einer genau vorbestimmten Lage relativ zu der Prüfbildhalterung fixiert wird. Diese Art der präzisen Lagefixierung ist deshalb von Vorteil, weil sie auch der Art der Fixierung des Prüfbilds bzw. des entsprechenden Filmbands während des vorherigen Belichtens im Filmrecorder entspricht.

Im Übrigen ist es bevorzugt, wenn auch das Referenzbild in einer fixen Ausrichtung relativ zu der Prüfbildhalterung angeordnet ist. Dadurch ist auch für mehrere aufeinander folgende Messungen gewährleistet, dass die Referenzmarken stets dieselbe Position einnehmen. Anstelle oder zusätzlich zu der vorerwähnten Lagefixierung des Referenzbilds durch Sperrgreiferstifte kann dieses auch dauerhaft an der Prüfbildhalterung befestigt sein, beispielsweise angeklebt sein. Das Referenzbild muss jedoch nicht direkt an oder in der Prüfbildhalterung befestigt sein, sondern kann auch an anderer Stelle entlang des Lichtstrahlengangs zwischen Lichtsender und Lichtempfänger angeordnet sein.

Alternativ zu der erläuterten festen Relativanordnung von Prüfbild und Referenzbild kann auch eine rechnerische Zuordnung der Relativlage vorgesehen sein, beispielsweise indem die üblicherweise vorhandenen Perforationen des Prüfbilds bzw. des entsprechenden Filmbands vom Lichtempfänger erfasst und mit ausgewertet werden.

Die erläuterte Referenzmarke ist beispielsweise an der Oberfläche einer transparenten Platte angebracht. Vorzugsweise ist das Referenzbild durch eine Glasscheibe gebildet, auf die eine oder mehrere Referenzmarken aufgedampft sind.

Als Referenzmarke ist wenigstens eine, vorzugsweise drei oder vier Lagemarkierungen vorgesehen, beispielsweise in Form von Referenzkreuzen. Derartige Lagemarkierungen entsprechen beispielsweise den Eckpunkten oder sonstigen Prüfmarken des Prüfbilds, und sie ermöglichen ein Überprüfen der genauen Lage, der Ausrichtung oder einer möglichen Verschiebung des Prüfbilds.

Zusätzlich kann als Referenzmarke ein Graustufenraster von mehreren Graustufen vorgesehen sein. Ein derartiges Graustufenraster ermöglicht - für die fotometrischen Untersuchungen - ein Anpassen des Farbraums des verwendeten Lichtempfängers an den Farbraum eines standardisierten Densitometers.

Ferner kann - alternativ oder zusätzlich - als Referenzmarke wenigstens eine Referenzkante vorgesehen sein, die räumlich höher aufgelöst ist als die Auflösung des verwendeten Lichtempfängers. Vorzugsweise ist die räumliche Auflösung dieser Referenzkante wesentlich höher, beispielsweise um vier Größenordnungen. Eine derartige Referenzkante als Referenzmarke ermöglicht die Bestimmung der Modulationsübertragungsfunktion der Prüfvorrichtung, nämlich indem anhand der ermittelten Empfangssignale die Abweichungen von einer gleichmäßigen Verteilung der Fouriertransformierten Frequenzen bestimmt werden.

Außerdem kann - alternativ oder zusätzlich - ein homogener Grauwertbereich vorgesehen sein, beispielsweise ein Wert von 50 % Grau. Ein derartiger Grauwertbereich ermöglicht die Überprüfung der Ausleuchtungshomogenität des verwendeten Lichtsenders.

Es ist besonders vorteilhaft, wenn auch das Prüfbild stets gemäß einem standardisierten Muster belichtet ist. Dadurch können die Empfangssignale, die von den vorbekannten Referenzmarken des Referenzbilds stammen, in feste Beziehung zu dem Aufbau des Prüfbilds gesetzt werden.

Vorzugsweise sind an dem Prüfbild eine oder mehrere Prüfmarken vorgesehen, die für sich oder in Kombination mit einer Referenzmarke des überlagerten Referenzbilds die Beurteilung eines Qualitätsparameters der Belichtung ermöglichen. Beispielsweise kann es sich bei einer derartigen Prüfmarke eines Standard-Prüfbilds um eine Prüfkante zur Untersuchung der optischen Modulationsübertragungsfunktion des Filmrecorders handeln, um ein geometrisches Muster zur subjektiven Beurteilung der Auflösungsgrenze, um ein Graustufenraster zur Messung der fotometrischen Kalibrierung, um ein Farbmuster zur Beurteilung der Farbwiedergabe, um ein Balkenmuster zur Überprüfung der Streulichtverteilung, um einen Grauwertgradienten zur Linearitätsüberprüfung, um eine Bildlagemarkierung, und/oder um ein Testmuster zur Konvergenzbeurteilung.

Die genannte Aufgabe wird ferner durch ein Prüfverfahren mit den Merkmalen des Anspruchs 9, gelöst, wobei dieses Prüfverfahren insbesondere gemäß der Funktionsweise der erläuterten Prüfvorrichtung weitergebildet ist.

Schließlich bezieht sich die Erfindung auch auf die Verwendung eines Digitalscanners, insbesondere eines herkömmlichen Digitalscanners, in dessen Lichtstrahlengang ein Referenzbild mit wenigstens einer Referenzmarke angeordnet ist, zum Prüfen der Belichtungsqualität eines belichteten Films in der erläuterten Weise.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:
- Fig. 1: den schematischen Aufbau einer Prüfvorrichtung,
- Fig. 2: einen Teil einer Prüfbildhalterung,
- Fig. 3: ein Referenzbild, und
- Fig. 4: ein Prüfbild.

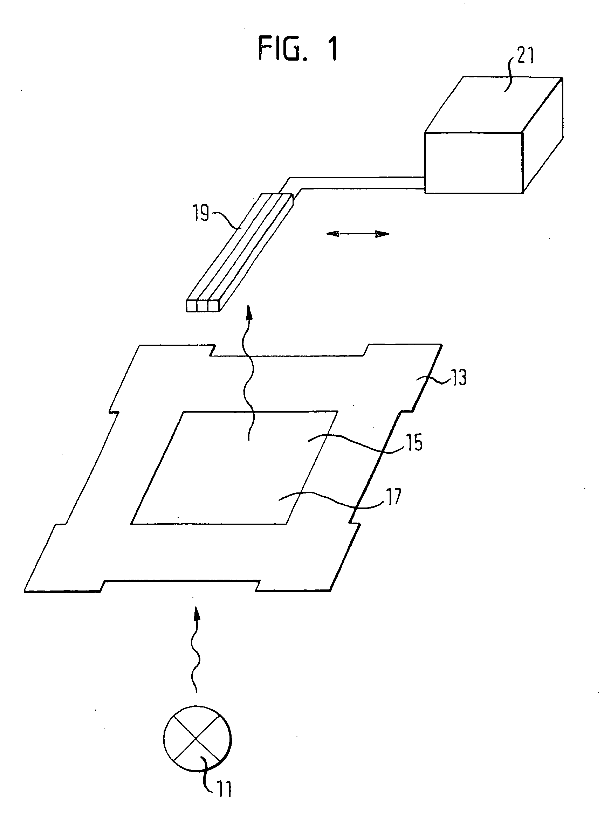

Fig. 1 zeigt den prinzipiellen Aufbau einer Prüfvorrichtung. Diese besitzt einen Lichtsender 11, beispielsweise eine Glühlampe, mit einer Sendeoptik (in Fig. 1 nicht gezeigt), die eine homogene Verteilung des ausgesendeten Lichts bewirkt.

In Senderichtung des Lichtsenders 11 ist eine rahmenförmige Prüfbildhalterung 13 angeordnet, die ein Prüfbild 15 und ein Referenzbild 17 umschließt, wie nachfolgend noch erläutert wird.

Bezüglich der Senderichtung des Lichtsenders 11 sind der Prüfbildhalterung 13 eine Empfangsoptik (in Fig. 1 nicht gezeigt) und ein Lichtempfänger 19 nachgeordnet, der zum Empfangen des Lichts dient, das von dem Lichtsender 11 in Richtung des Lichtempfängers 19 ausgesendet und durch die Prüfbildhalterung 13 bzw. das hiervon gehaltene Prüfbild 15 und Referenzbild 17 durchgelassen wird.

Der Lichtempfänger 19 ist als trilinearer Sensor ausgebildet, mit drei Zeilensensoren (CCDs), wobei diese Zeilensensoren mit einem Rot-, einem Grün- bzw. einem Blaufilter versehen sind. Über einen Linearantrieb mit Schrittmotor (in Fig. 1 nicht gezeigt) kann der Lichtempfänger 19 senkrecht zu der Senderichtung des Lichtsenders 11 und somit parallel zu der Oberfläche der Prüfbildhalterung 13 bewegt werden, um das vom Prüfbild 15 und Referenzbild 17 durchgelassene Licht abzutasten, wobei jeder der drei genannten Zeilensensoren eine Vielzahl von linear angeordneten Bildpunkten erfasst.

Der Lichtempfänger 19 ist mit einer Steuer- und Auswerteeinrichtung 21 verbunden, die den genannten Linearantrieb für die Bewegung des Lichtempfängers 19 steuert und die die vom Lichtempfänger 19 erzeugten Empfangssignale auswertet, wie nachfolgend noch erläutert wird. Die Steuer- und Auswerteeinrichtung 21 kann beispielsweise einen Analog/Digital-Wandler zur Digitalisierung der Empfangssignale, sowie einen Mikroprozessor aufweisen.

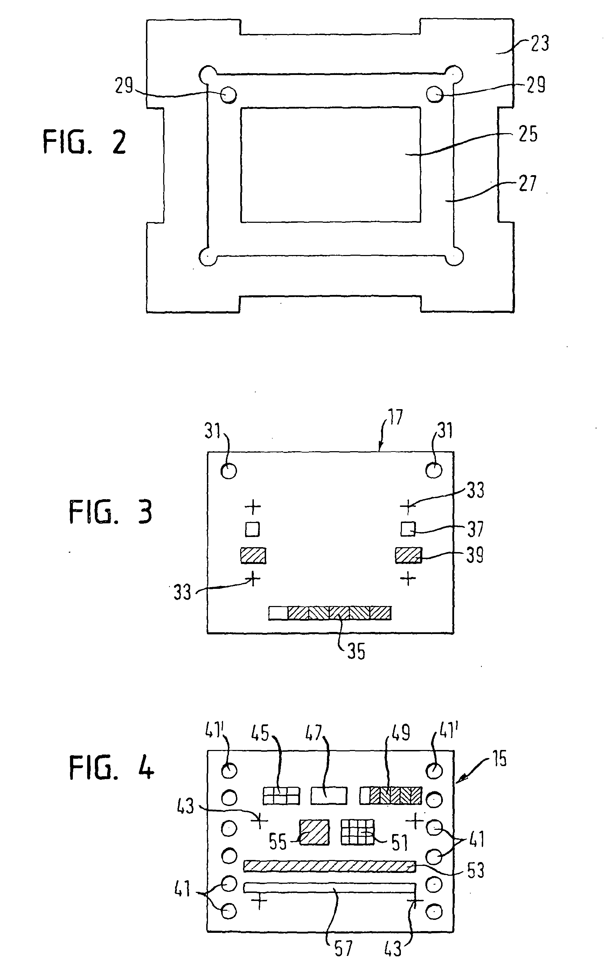

Fig. 2 zeigt ein rahmenförmiges Unterteil 23 der Prüfbildhalterung 13. Dieses besitzt einen zentralen, rechteckigen Fensterausschnitt 25, der von einer rahmenförmigen Vertiefung 27 zur Aufnahme des Prüfbilds 15 und des Referenzbilds 17 umgeben ist. Innerhalb der Vertiefung 27 sind zwei vorspringende Sperrgreiferstifte 29 angeordnet, die eine präzise Lagefixierung des Prüfbilds 15 und des Referenzbilds 17 innerhalb der Vertiefung 27 ermöglichen.

Die Prüfbildhalterung 13 gemäß Fig. 1 besitzt ferner ein Oberteil (in den Figuren nicht gezeigt), das komplementär zu dem Unterteil 23 ausgebildet ist und mit diesem zur Deckung gebracht werden kann, um das in der Vertiefung 27 aufgenommene Prüfbild 15 und Referenzbild 17 einzuschließen.

Fig. 3 zeigt einen möglichen Aufbau des Referenzbilds 17. Dieses ist als Glasscheibe ausgebildet, die mit Referenzmarken versehen und im Übrigen transparent ist. Das Referenzbild 17 besitzt zwei Bohrungen 31, in die die Sperrgreiferstifte 29 eingreifen, wenn das Referenzbild 17 in die Vertiefung 27 der Prüfbildhalterung 13 eingelegt ist. Vorzugsweise ist das Referenzbild 17 dauerhaft in die Prüfbildhalterung 13 eingeklebt.

Die bereits genannten Referenzmarken sind auf die Glasscheibe aufgedampft. Als geometrische Referenzmarken sind vier Referenzkreuze 33 mit einer Strichstärke von 0,01 mm vorgesehen, die als Lagemarkierungen dienen. Ferner ist ein Graustufenraster 35 mit einer linearen Anordnung von mehreren, vorzugsweise einundzwanzig Feldern unterschiedlicher Grauwerte vorgesehen. Weiterhin sind zwei Kantenmuster 37 mit hochaufgelösten Kanten in vertikaler und horizontaler Ausrichtung vorgesehen. Außerdem ist das Referenzbild 17 mit zwei Homogenitätsmessfeldern 39 versehen, die jeweils einen homogenen Grauwert von 50 % Grau besitzen.

Fig. 4 zeigt einen möglichen Aufbau eines Prüfbilds 15, das gemäß einem Standardmuster belichtet ist, mehrere Prüfmarken aufweist und im Übrigen transparent ist. Das Prüfbild 15 besitzt mehrere seitliche Vorschubbohrungen 41, wobei zwei Bohrungen 41' wiederum zur Aufnahme der Sperrgreiferstifte 29 dienen, wenn das Prüfbild 15 in die Vertiefung 27 der Prüfbildhalterung 13 eingelegt wird.

Als Prüfmarken sind an dem Prüfbild 15 vorgesehen: vier Prüfkreuze 43, die als Lagemarkierungen dienen; ein Kantenmuster 45 mit horizontalen und vertikalen Prüfkanten, jeweils nach den Primärfarben Rot, Grün und Blau getrennt; ein RMS-Messfeld 47 mit horizontalen und vertikalen Rechteckrastern unterschiedlicher Strichstärke, nach Rot, Grün und Blau getrennt; ein Graustufenraster 49 mit mehreren, beispielsweise einundzwanzig äquidistanten Grauwertfeldern; ein Farbraumumwandlungsmessfeld 51 mit verschiedenen Farbbereichen in einer Standardanordnung (Macbeth Colorchecker); ein Streulichtprüfbalken 53; ein - idealerweise homogen belichtetes - Homogenitätsmessfeld 55; und ein Belichtungslinearitätsmessfeld 57, das für Rot, Grün und Blau jeweils einen stufenlosen Grauwertgradienten aufweist.

Die anhand der Figuren erläuterte Prüfvorrichtung dient zum Prüfen der Belichtungsqualität eines mittels eines digitalen Filmrecorders belichteten Films, gemäß dem folgenden Verfahren:

Zunächst wird mittels des zu prüfenden Filmrecorders ein Film gemäß einem Standardmuster belichtet, um das in Fig. 4 gezeigte Prüfbild 15 zu erzeugen. Die Erzeugung dieses Prüfbilds 15 kann in vorteilhaft einfacher

Weise dadurch erfolgen, dass das Standardmuster in digitaler Form in dem Filmrecorder dauerhaft abgespeichert ist und "auf Knopfdruck" oder durch entsprechende Aktivierung der Steuersoftware des Filmrecorders zur Belichtung des Films abgerufen werden kann.

Danach wird ein Teil des belichteten Films, nämlich das Prüfbild 15 in das in Fig. 2 gezeigte Unterteil 23 der Prüfbildhalterung 13 eingelegt. Zuvor ist die Prüfbildhalterung 13 bereits mit dem in Fig. 3 gezeigten Referenzbild 17 versehen worden, nämlich indem dieses in das Unterteil 23 derart eingelegt worden ist, dass die Sperrgreiferstifte 29 in die Bohrungen 31 des Referenzbilds 17 mit seitlichem Spiel eingreifen. Das derart eingelegte Referenzbild 17 ist dann durch Ankleben an dem Unterteil fixiert worden, und zwar unter Beobachtung unter einem Mikroskop, um zu gewährleisten, dass das Referenzbild 17 innerhalb der Prüfbildhalterung 13 eine vorbestimmte Lage relativ zu den Sperrgreiferstiften 29 exakt einnimmt. Falls eine Nachmessung nach endgültiger Fixierung des Referenzbilds 17 dennoch eine Lageabweichung vom Sollwert ergibt, kann diese Abweichung als Offset auch noch rechnerisch bei der nachfolgend erläuterten Auswertung berücksichtigt werden.

In die Bohrungen 41' des Prüfbilds 15, das in die derartig vorbereitete Prüfbildhalterung 13 eingelegt worden ist, greifen die Sperrgreiferstifte 29 ohne Spiel ein. Dadurch ist die Lage des Prüfbilds 15 bezüglich der Prüfbildhalterung 13 - und somit auch bezüglich des Referenzbilds 17 - exakt vorgeben.

Danach wird das Unterteil 23 mit dem erläuterten Oberteil versehen, so dass das Prüfbild 15 innerhalb der Prüfbildhalterung 13 gefangen ist.

Nachfolgend wird die Prüfbildhalterung 13 in den Sendelichtstrahlengang zwischen dem Lichtsender 11 und dem Lichtempfänger 19 der Prüfvorrichtung eingebracht, wie in Fig. 1 gezeigt.

Danach wird die Anordnung aus Referenzbild 17 und hiermit überlagertem Prüfbild 15 mittels des linear bewegten Lichtempfängers 19 zeilenweise abgetastet, und die hierbei vom Lichtempfänger 19 ermittelten Empfangssignale werden an die Steuer- und Auswerteeinrichtung 21 weitergeleitet. Dort werden sie digitalisiert und hinsichtlich verschiedener vorbestimmter Qualitätsparameter ausgewertet.

Diese Auswertung kann beispielsweise die folgenden Untersüchungsmaßnahmen umfassen:

Durch Vergleich der Lage der Referenzkreuze 33 des Referenzbilds 17 mit der Lage der Prüfkreuze 43 des Prüfbilds 15 lassen sich Lage- und Ausrichtungsfehler identifizieren, die eine Aussage über die Verzeichnungsfreiheit der Belichtungsoptik des verwendeten Filmrecorders und über die Positionsgenauigkeit des Filmbands während der Belichtung im Filmrecorder liefern.

Indem die Referenzkreuze 33 mit Prüfkreuzen 43 unterschiedlicher Farbe verglichen werden, lassen sich ferner mögliche dispersive Abbildungsfehler der Belichtungsoptik und des Belichtungssystems des Filmrekorders erkennen, die aus einer unzureichenden Konvergenz der den Grundfarben Rot, Grün, Blau entsprechenden Belichtungsstrahlen des verwendeten Filmrecorders resultieren können.

Auf Grundlage des Graustufenrasters 49 des Prüfbilds 15 kann die fotometrische Kalibrierung des für die Belichtung verwendeten Filmrecorders überprüft werden. Dieser Überprüfung kann eine Bestimmung des Linearitätsverhaltens des Lichtempfängers 19 anhand des idealen Graustufenrasters 35 des Referenzbilds 17 zugrunde gelegt werden, um eventuelle Abweichungen von einer ideal-linearen Bildwandlung innerhalb der Prüfvorrichtung zu berücksichtigen.

Anhand der Kantenmuster 45 des Prüfbilds 15 kann für die Farben Rot, Grün und Blau jeweils die optische Modulationsübertragungsfunktion (MTF) des Filmrecorders, insbesondere der hierin verwendeten Festkörperlaser, bestimmt werden. Auch bei dieser Bestimmung kann die Modulationsübertragungsfunktion der Prüfvorrichtung berücksichtigt werden, nämlich indem diese anhand der hoch aufgelösten Kantenmuster 37 des Referenzbilds 17 ermittelt wird.

Als weiterer Qualitätsparameter kann durch Betrachtung des Homogenitätsmessfelds 55 des Prüfbilds 15 die Homogenität der Belichtung innerhalb des verwendeten Filmrecorders überprüft werden. Auch hier kann anhand des ideal gleichmäßigen Homogenitätsmessfelds 39 des Referenzbilds 17 die Ausleuchtungs- und Wandlungshomogenität der Prüfvorrichtung verifiziert und berücksichtigt werden.

Die Untersuchung des Streulichtprüfbalkens 53 des Prüfbilds 15 und der Umgebung dieses Streulichtprüfbalkens 53 ermöglicht eine Aussage über das Auftreten von Streulicht bei der Filmbelichtung innerhalb des verwendeten Filmrecorders. Hierfür ist der Streulichtprüfbalken 53 parallel zu der Aufzeichnungsrichtung des verwendeten Filmrecorders mit einem vorgegebenen Grauwert - beispielsweise 50 % Grau - belichtet, und er ist auf der einen Seite von einem maximal belichteten Balken und auf der anderen Seite von einem idealerweise unbelichteten Balken umgeben. Durch Messung des tatsächlichen Belichtungsprofils senkrecht zu diesem Balkenmuster und durch Differenzbildung zwischen dem gemessenen maximalen Belichtungswert und der gemessenen Schleierbelichtung kann die räumliche Verteilung des Streulichts ermittelt werden, das bei der Aufzeichnung des mittleren Grauwertbalkens innerhalb des ansonsten unbelichteten Nachbarbalkens erzeugt worden ist. Als Qualitätsparameter für diese Streulichterzeugung kann beispielsweise das Integral über die Streulichtverteilung herangezogen werden.

Weiterhin können das Rauschen und der Signalstörabstand der Belichtung in dem verwendeten Filmrecorder ermittelt werden. Zu diesem Zweck wird das RMS-Messfeld 47 des Prüfbilds 15 untersucht, das aus einer Vielzahl von Flächen jeweils derselben Größe (beispielsweise 8 x 8 Bildpunkte) besteht, die mit einem vorgegebenen mittleren Belichtungswert für jede Farbe belichtet sind.

Ferner ermöglicht eine Untersuchung des Belichtungslinearitätsmessfelds 57 des Prüfbilds die Bestimmung der Kennlinien der in einem Laser-Filmrecorder verwendeten akusto-optischen Modulatoren für die Modulation des Rot-, Grün- bzw. Blau-Laserlichts.

Schließlich kann anhand des Farbraumumwandlungsmessfelds 51 des Prüfbilds 15 auch die Farbraumumwandlung von Scannerdichten in Status M Dichten berechnet werden.

Zu der erläuterten Signalauswertung ist noch anzumerken, dass auch lediglich eine beliebige Auswahl der genannten Untersuchungsmaßnahmen durchgeführt werden kann. Ebenso ist es möglich, nur eine Auswahl oder eine einzige der erläuterten Referenzmarken 33, 35, 37, 39 an dem Referenzbild 17 vorzusehen. Auch die erläuterten Prüfmarken 43, 45, 47, 49, 51, 53, 55, 57 sind selbstverständlich nicht alle zwingend erforderlich; stattdessen kann das Prüfbild 15 auch lediglich mit einer Auswahl oder mit einer einzigen dieser Prüfmarken versehen sein. Auch die Auswertung eines Prüfbilds 15 ohne Prüfmarken ist prinzipiell möglich, beispielsweise indem die Lage der Referenzkreuze 33 des Referenzbilds 17 mit der Lage der Randbereiche der belichteten Fläche des Prüfbilds 15 oder mit der Lage der Vorschubbohrungen 41 des Prüfbilds 15 verglichen wird.

Zu der erläuterten Prüfvorrichtung ist noch anzumerken, dass das Abtasten von Prüfbild 15 und Referenzbild 17 nicht unbedingt zeilenweise erfolgen muss, sondern beispielsweise auch bildpunktweise sequentiell oder für sämtliche Bildpunkte parallel erfolgen kann.

Außerdem ist anzumerken, dass für die Herstellung der erläuterten Prüfvorrichtung auch ein herkömmlicher Digitalscanner verwendet werden kann, der mit einem Referenzbild 17 der erläuterten Art ausgestattet wird. In diesem Fall ist es von besonderem Vorteil, wenn die Prüfbildhalterung 13 in der Form eines Diarahmens ausgebildet ist, so dass die Prüfbildhalterung 13 mit Prüfbild 15 und Referenzbild 17 auf einfache Weise in den üblicherweise vorhandenen Diaeinschub eingeführt werden kann.

### Bezugszeichenliste

- 11: Lichtsender
- 13: Prüfbildhalterung
- 15: Prüfbild
- 17: Referenzbild
- 19: Lichtempfänger
- 21: Steuer- und Auswerteeinrichtung
- 23: Unterteil
- 25: Fensterausschnitt
- 27: Vertiefung
- 29: Sperrgreiferstift
- 31: Bohrung
- 33: Referenzkreuz
- 35: Graustufenraster
- 37: Kantenmuster
- 39: Homogenitätsmessfeld
- 41, 41': Vorschubbohrung
- 43: Prüfkreuz
- 45: Kantenmuster
- 47: RMS-Messfeld
- 49: Graustufenraster
- 51: Farbraumumwandlungsmessfeld
- 53: Streulichtprüfbalken
- 55: Homogenitätsmessfeld
- 57: Belichtungslinearitätsmessfeld

## Patentansprüche

1. Prüfvorrichtung zum Prüfen der Belichtungsqualität eines belichteten Films, insbesondere eines Laufbildfilms, mit:
- einer Prüfbildhalterung (13) zum Halten eines Prüfbilds (15) des belichteten Films,
- einem Referenzbild (17), das wenigstens eine Referenzmarke (33, 35, 37, 39) aufweist und das in Überlagerung zu dem von der Prüfbildhalterung gehaltenen Prüfbild (15) vorgesehen ist,
- einem Lichtsender (11) zum Beleuchten des von der Prüfbildhalterung gehaltenen Prüfbilds (15) und des hiermit überlagerten Referenzbilds (17),
- einem Lichtempfänger (19) zum Empfangen des durch das Referenzbild und das Prüfbild transmittierten Lichts und zum Erzeugen entsprechender elektrischer Empfangssignale, und
- einer Auswerteeinrichtung (21) zum Auswerten der Empfangssignale des Lichtempfängers (19) hinsichtlich wenigstens eines Qualitätsparameters,
**dadurch gekennzeichnet,**
**dass** das Referenzbild (17) und das von der Prüfbildhalterung (13) gehaltene Prüfbild (15) in vorbestimmter Relativlage zueinander vorgesehen sind,
**dass** als Referenzmarke des Referenzbilds (17) wenigstens eine Lagemarkierung (33) vorgesehen ist, und
**dass** die Auswerteeinrichtung (21) dergestalt ausgebildet ist, dass die Lage der Lagemarkierung (33) des Referenzbilds (17) mit der Lage einer Prüfmarke (43) des Prüfbilds (15) vergleichbar ist, um geometrische Qualitätsparameter wie die Verzeichnungsfreiheit der Belichtungsoptik einer für das Belichten des Films verwendeten Belichtungsvorrichtung, die Positionsgenauigkeit einer für das Belichten des Films verwendeten Belichtungsvorrichtung oder dispersive Abbildungsfehler der Belichtungsoptik einer für das Belichten des Films verwendeten Belichtungsvornchtung zu überprüfen.

2. Prüfvorrichtung nach Anspruch 1,
**dadurch gekennzeichnet,**
**dass** das Referenzbild (17) in fixer Lage relativ zu der Prüfbildhalterung (13) angeordnet ist.

3. Prüfvorrichtung nach einem der vorhergehenden Ansprüche,
**dadurch gekennzeichnet,**
**dass** die Prüfbildhalterung (13) wenigstens zwei Sperrgreiferstifte (29) zum Halten des Prüfbilds (15) und/oder des Referenzbilds (17) in vorbestimmter Lage aufweist, wobei
das Prüfbild (15) und/oder das Referenzbild (17) vorzugsweise wenigstens zwei Bohrungen (31, 41') zur Aufnahme jeweils eines Sperrgreiferstifts (29) aufweist.

4. Prüfvorrichtung nach einem der vorhergehenden Ansprüche,
**dadurch gekennzeichnet,**
**dass** die Prüfbildhalterung (13) zwei Rahmenabschnitte (23) aufweist, zwischen denen das Prüfbild (15) und/oder das Referenzbild (17) einschließbar ist, und/oder
**dass** die Prüfbildhalterung (13) die Form eines Diarahmens aufweist.

5. Prüfvorrichtung nach einem der vorhergehenden Ansprüche,
**dadurch gekennzeichnet,**
**dass** das Referenzbild (17) eine transparente Platte aufweist, an deren Oberfläche die Referenzmarke angebracht ist, und/oder
**dass** das Referenzbild (17) eine Glasscheibe aufweist, auf die die Referenzmarke aufgedampft ist.

6. Prüfvorrichtung nach einem der vorhergehenden Ansprüche,
**dadurch gekennzeichnet,**
**dass** als Referenzmarke zusätzlich ein Graustufenraster (35) von mehreren Graustufen vorgesehen ist, und/oder
**dass** als Referenzmarke zusätzlich wenigstens eine Referenzkante (37) vorgesehen ist, und/oder
**dass** als Referenzmarke zusätzlich ein Homogenitätsmessfeld (39) vorgesehen ist.

7. Prüfvorrichtung nach einem der vorhergehenden Ansprüche,
**dadurch gekennzeichnet,**
**dass** der Lichtempfänger (19) zum Erzeugen der Empfangssignale gemäß einer Rot-, einer Grün- und einer Blau-Empfindlichkeit ausgebildet ist, und/oder
**dass** der Lichtempfänger (19) zum zeilenweise erfolgenden Scannen des Prüfbilds (15) ausgebildet ist.

8. Prüfvorrichtung nach einem der vorhergehenden Ansprüche,
**dadurch gekennzeichnet,**
**dass** die Auswerteeinrichtung (21) einen Analog/Digital-Wandler zum Umwandeln der Empfangssignale in Digitalwerte aufweist, und/oder
**dass** der Lichtsender (11), der Lichtempfänger (19) und die Auswerteeinrichtung (21) Teil einer digitalen Scannereinrichtung sind.

9. Prüfverfahren zum Prüfen der Belichtungsqualität eines belichteten Films, insbesondere eines Laufbildfilms, wobei:
- ein Prüfbild (15) des belichteten Films und ein Referenzbild (17), das wenigstens eine Referenzmarke (33, 35, 37, 39) aufweist, einander überlagert werden,
- die Anordnung aus Prüfbild (15) und hiermit überlagertem Referenzbild (17) beleuchtet wird,
- das durch das Prüfbild (15) und das Referenzbild (17) transmittierte Licht in elektrische Empfangssignale umgewandelt wird, und
- die Empfangssignale hinsichtlich wenigstens eines Qualitätsparameters ausgewertet werden,
**dadurch gekennzeichnet,**
**dass** das Referenzbild (17) und das Prüfbild (15) einander in vorbestimmter Relativlage überlagert werden,
**dass** als Referenzmarke des Referenzbilds (17) wenigstens eine Lagemarkierung (33) vorgesehen ist, und
**dass** die Lage der Lagemarkierung (33) des Referenzbilds (17) mit der Lage einer Prüfmarke (43) des Prüfbilds (15) verglichen wird, um geometrische Qualitätsparameter wie die Verzeichnungsfreiheit der Belichtungsoptik einer für das Belichten des Films verwendeten Belichtungsvorrichtung, die Positionsgenauigkeit einer für das Belichten des Films verwendeten Belichtungsvorrichtung oder dispersive Abbildungsfehler der Belichtungsoptik einer für das Belichten des Films verwendeten Belichtungsvorrichtung zu überprüfen.

10. Prüfverfahren nach Anspruch 9,
**dadurch gekennzeichnet,**
**dass** vor dem Überlagern des Prüfbilds (15) und des Referenzbilds (17) das Prüfbild gemäß einem vorbestimmten Muster belichtet wird, und/oder
**dass** das Prüfbild (15) als eine Prüfmarke eine Lagemarkierung (43) aufweist.

11. Prüfverfahren nach einem der Ansprüche 9 oder 10,
**dadurch gekennzeichnet,**
**dass** das Referenzbild (17) in fixer Lage relativ zu der Prüfbildhalterung (13) gehalten wird.

12. Prüfverfahren nach einem der Ansprüche 9 bis 11,
**dadurch gekennzeichnet,**
**dass** das Prüfbild (15) mittels wenigstens zweier Sperrgreiferstifte in vorbestimmter Lage gehalten wird.

13. Prüfverfahren nach einem der Ansprüche 9 bis 12,
**dadurch gekennzeichnet,**
**dass** wenigstens einer der folgenden Qualitätsparameter ausgewertet wird:
die Verzeichnungsfreiheit der Belichtungsoptik der für das Belichten des Films verwendeten Belichtungsvorrichtung, die Konvergenz des Belichtungsstrahls der für das Belichten des Films verwendeten Belichtungsvorrichtung, die Positionsgenauigkeit der für das Belichten des Films verwendeten Belichtungsvornchtung, die Modulationsübertragungsfunktion der für das Belichten des Films verwendeten Belichtungsvorrichtung, die Linearität der Belichtungsintensität der für das Belichten des Films verwendeten Belichtungsvorrichtung, die Homogenität der Belichtung der für das Belichten des Films verwendeten Belichtungsvorrichtung, die Freiheit von Belichtungsstreulicht, das RMS-Rauschen, der Signalstörabstand, oder die Kennlinie der Belichtungsmodulation der für das Belichten des Films verwendeten Belichtungsvorrichtung.

## Claims

1. A test apparatus to check the exposure quality of an exposed film, in particular of a motion film, comprising:
- a test pattern holder (13) for holding a test pattern (15) of the exposed film;
- a reference pattern (17) which has at least one reference mark (33, 35, 37, 39) and is provided in superimposition with respect to the test pattern (15) held by the test pattern holder;
- a light transmitter (11) for the illumination of the test pattern (15) held by the test pattern holder and of the reference pattern (17) superimposed therewith;
- a light receiver (19) for the reception of the light transmitted through the reference pattern and through the test pattern and for the generation of corresponding electrical received signals; and
- an evaluation device (21) for the evaluation of the received signals of the light receiver (19) with respect to at least one quality parameter;
**characterized in that**
the reference pattern (17) and the test pattern (15) held by the test pattern holder (13) are provided in a pre-determined relative position to one another;
**in that** at least one positional marking (33) is provided as the reference mark of the reference pattern (17); and
**in that** the evaluation device (21) is made such that the position of the positional marking (33) of the reference pattern (17) is comparable with the position of a test mark (43) of the test pattern (15) to check geometrical quality parameters such as the freedom from distortion of the optical exposure system of an exposure device used for the exposure of the film, the positional precision of an exposure device used for the exposure of the film or dispersed aberration of the optical exposure system of an exposure device used for the exposure of the film.

2. A test apparatus in accordance with claim 1, **characterized in that** the reference pattern (17) is arranged in a fixed position relative to the test pattern holder (13).

3. A test apparatus in accordance with any one of the preceding claims, **characterized in that** the test pattern holder (13) has at least two blocking grip pins (29) for the holding of the test pattern (15) and/or of the reference pattern (17) in a pre-determined position, with the test pattern (15) and/or the reference pattern (17) preferably having at least two bores (31, 41') for the reception of one blocking grip pin (29) each.

4. A test apparatus in accordance with any one of the preceding claims, **characterized in that** the test pattern holder (13) has two frame sections (23) between which the test pattern (15) and/or the reference pattern (17) can be enclosed; and/or **in that** the test pattern holder (13) has the form of a transparency mount.

5. A test apparatus in accordance with any one of the preceding claims, **characterized in that** the reference pattern (17) has a transparent plate to whose surface the reference mark has been applied; and/or **in that** the reference pattern (17) comprises a glass pane onto which the reference mark has been vapor deposited.

6. A test apparatus in accordance with any one of the preceding claims, **characterized in that** a gray scale pattern (35) of a plurality of gray scales is additionally provided as the reference mark; and/or in that at least one reference edge (37) is additionally provided as the reference mark; and/ or **in that** a homogeneity measuring field (39) is additionally provided as the reference mark.

7. A test apparatus in accordance with any one of the preceding claims, **characterized in that** the light receiver (19) is made for the generation of the received signals in accordance with a sensitivity to red, green and blue; and/ or **in that** the light receiver (19) is made for the scanning of the test pattern (15) line by line.

8. A test apparatus in accordance with any one of the preceding claims, **characterized in that** the evaluation device (21) has an analog/digital converter for the conversion of the received signals into digital values; and/or **in that** the light transmitter (11), the light receiver (19) and the evaluation device (21) are part of a digital scanner device.

9. A test method for the checking of the exposure quality of an exposed film, in particular of a motion film, wherein
- a test pattern (15) of the exposed film and a reference pattern (17), which has at least one reference mark (33, 35, 37, 39), are superimposed on one another;
- the arrangement of the test pattern (15) and of the reference pattern (17) superimposed therewith is illuminated;
- the light transmitted through the test pattern (15) and through the reference pattern (17) is converted into electrical received signals; and
- the received signals are evaluated with respect to at least one quality parameter,
**characterized in that**
the reference pattern (17) and the test pattern (15) held by the test pattern holder (13) are provided in a pre-determined relative position to one another;
**in that** at least one positional marking (33) is provided as the reference mark of the reference pattern (17); and
**in that** the position of the positional marking (33) of the reference pattern (17) is compared with the position of a test mark (43) of the test pattern (15) to check geometrical quality parameters such as the freedom from distortion of the optical exposure system of an exposure device used for the exposure of the film, the positional precision of an exposure device used for the exposure of the film or dispersed aberration of the optical exposure system of an exposure device used for the exposure of the film.

10. A test method in accordance with claim 9, **characterized in that** the test pattern is exposed in accordance with a pre-determined pattern prior to the superimposition of the test pattern (15) and of the reference pattern (17); and/or **in that** the test pattern (15) has a positional mark (43) as a test mark.

11. A test method in accordance with any one of the claims 9 or 10, **characterized in that** the reference pattern (17) is held in a fixed position relative to the test pattern holder (13).

12. A test method in accordance with any one of the claims 9 to 11, **characterized in that** the test pattern (15) is held in a predetermined position by means of at least two blocking grip pins.

13. A test method in accordance with any one of the claims 9 to 12, **characterized in that** at least one of the following quality parameters is evaluated:
the freedom from distortion of the optical exposure system of the exposure apparatus used for the exposure of the film, the convergence of the exposure ray of the exposure apparatus used, the positional accuracy of the exposure apparatus used for the exposure of the film, the modulation transfer function of the exposure apparatus used for the exposure of the film, the linearity of the exposure intensity of the exposure apparatus used for the exposure of the film, the homogeneity of the exposure of the exposure apparatus used for the exposure of the film, the freedom from scattered exposure light, the RMS noise, the signal to noise ratio or the characteristic line of the exposure modulation of the exposure apparatus used for the exposure of the film.

## Revendications

1. Dispositif de contrôle pour contrôler la qualité d'exposition d'une pellicule exposée, en particulier d'une pellicule cinématographique, comportant
- une monture d'image à contrôler pour retenir une image de contrôle (15) de la pellicule exposée,
- une image de référence (17) qui présente au moins une marque de référence (33, 35, 37, 39) et qui est prévue en superposition de l'image de contrôle (15) retenue par la monture d'image de contrôle,
- un émetteur de lumière (11) pour éclairer l'image de contrôle (15) retenue par la monture d'image de contrôle et l'image de référence (17) superposée par celle-ci,
- un récepteur de lumière (19) pour recevoir la lumière transmise par l'image de référence et par l'image de contrôle et pour engendrer des signaux de réception électriques correspondants, et
- un dispositif d'évaluation (21) pour évaluer les signaux de réception du récepteur de lumière (19) en ce qui concerne au moins un paramètre de qualité,
**caractérisé en ce que**
l'image de référence (17) et l'image de contrôle retenue par la monture d'image de contrôle (13) sont prévues en position relative prédéterminée l'une par rapport à l'autre,
**en ce qu**'il est prévu à titre de marque de référence de l'image de référence (17) au moins un marquage de position (33), et
**en ce que** le dispositif d'évaluation (21) est réalisé de telle sorte que la position du marquage de position (33) de l'image de référence (17) est comparable à la position d'une marque de contrôle (43) de l'image de contrôle (15) pour vérifier des paramètres de qualité géométriques tels que la liberté de distorsion d'image de l'optique d'exposition d'un dispositif d'exposition utilisé pour exposer la pellicule, l'exactitude de position d'un dispositif d'exposition utilisé pour exposer la pellicule ou des erreurs de reproduction dispersives de l'optique d'exposition d'un dispositif d'exposition utilisé pour exposer la pellicule.

2. Dispositif de contrôle selon la revendication 1,
**caractérisé en ce que**
l'image de référence (17) est agencée en position fixe par rapport à la monture d'image de contrôle (13).

3. Dispositif de contrôle selon l'une des revendications précédentes,
**caractérisé en ce que**
la monture d'image de contrôle (13) présente au moins deux pointes-griffes de blocage (29) pour maintenir l'image de contrôle (15) et/ou l'image de référence (17) dans une position prédéterminée,
l'image de contrôle (15) et/ou l'image de référence (17) présentant de préférence au moins deux perçages (31, 41') pour recevoir chacune une pointe-griffe de blocage (29).

4. Dispositif de contrôle selon l'une des revendications précédentes,
**caractérisé en ce que**
la monture d'image de contrôle (13) présente deux tronçons de cadre (23) entre lesquels l'image de contrôle (15) et/ou l'image de référence (17) peut être enfermée, et/ou
**en ce que** la monture d'image de contrôle (13) a la forme d'un cadre de diapositive.

5. Dispositif de contrôle selon l'une des revendications précédentes,
**caractérisé en ce que**
l'image de référence (17) présente une plaque transparente sur la surface de laquelle est appliquée la marque de référence, et/ou **en ce que** l'image de référence (17) présente une plaque de verre sur laquelle la marque de référence est appliquée par vaporisation.

6. Dispositif de contrôle selon l'une des revendications précédentes,
**caractérisé en ce que**
il est prévu à titre de marque de référence additionnellement une trame de niveaux de gris (35) de plusieurs niveaux de gris, et/ou
**en ce qu**'il est prévu à titre de marque de référence additionnellement au moins une arête de référence (37), et/ou
**en ce qu**'il est prévu à titre de marque de référence additionnellement un champ de mesure d'homogénéité (39).

7. Dispositif de contrôle selon l'une des revendications précédentes,
**caractérisé en ce que**
le récepteur de lumière (19) pour engendrer les signaux de réception est réalisé conformément à une sensibilité de rouge, une sensibilité de vert et une sensibilité de bleu, et/ou
**en ce que** le récepteur de lumière (19) est réalisé pour scanner l'image de contrôle (15) ligne par ligne.

8. Dispositif de contrôle selon l'une des revendications précédentes,
**caractérisé en ce que**
le dispositif d'évaluation (21) présente un convertisseur analogique-numérique pour convertir les signaux de réception en valeurs numériques,
et/ou
l'émetteur de lumière (11), le récepteur de lumière (19) et le dispositif d'évaluation (21) font partie d'un système de scannage numérique.

9. Procédé de contrôle pour contrôler la qualité d'exposition d'une pellicule exposée, en particulier d'une pellicule cinématographique, dans lequel :
- une image de contrôle (15) de la pellicule exposée et une image de référence (17), qui présente au moins une marque de référence (33, 35, 37, 39) sont superposées l'une sur l'autre,
- l'agencement constitué par l'image de contrôle (15) et par l'image de référence (17) superposée par celle-ci est éclairé,
- la lumière transmise par l'image de contrôle (15) et par l'image de référence (17) est convertie en des signaux de réception électriques, et
- les signaux de réception sont évalués du point de vue d'au moins un paramètre de qualité,
**caractérisé en ce que**
l'image de référence (17) et l'image de contrôle (15) sont superposées l'une sur l'autre dans une position relative prédéterminée,
**en ce qu**'il est prévu un marquage de position (33) en tant que marque de référence de l'image de référence (17), et
**en ce que** la position du marquage de position (33) de l'image de référence (17) est comparée à la position d'une marque de contrôle (43) de l'image de contrôle (15) pour vérifier des paramètres de qualité géométriques tels que la liberté de distorsion d'image de l'optique d'exposition d'un dispositif d'exposition utilisé pour exposer la pellicule, l'exactitude de position d'un dispositif d'exposition utilisé pour exposer la pellicule ou des erreurs de reproduction dispersives de l'optique d'exposition d'un dispositif d'exposition utilisé pour exposer la pellicule.

10. Procédé de contrôle selon la revendication 9,
**caractérisé en ce que**
avant la superposition de l'image de contrôle (15) et de l'image de référence (17), l'image de contrôle (15) est exposée selon un motif prédéterminé,
et/ou
l'image de contrôle (15) présente un marquage de position (43) en tant que marque de contrôle.

11. Procédé de contrôle selon l'une des revendications 9 ou 10,
**caractérisé en ce que**
l'image de référence (17) est maintenue en position fixe par rapport à la monture d'image de contrôle (13).

12. Procédé de contrôle selon l'une des revendications 9 à 11,
**caractérisé en ce que**
l'image de contrôle (15) est maintenue dans une position prédéterminée au moyen d'au moins deux pointes-griffes de blocage.

13. Procédé de contrôle selon l'une des revendications 9 à 12,
**caractérisé en ce que**
au moins un des paramètres de qualité suivants est évalué :
la liberté de distorsion d'image de l'optique d'exposition du dispositif d'exposition utilisé pour exposer la pellicule, la convergence du rayon d'exposition du dispositif d'exposition utilisé pour exposer la pellicule, l'exactitude de position d'un dispositif d'exposition utilisé pour exposer la pellicule, la fonction de transmission de modulation pour le dispositif d'exposition utilisé pour exposer la pellicule, la linéarité de l'intensité d'exposition du dispositif d'exposition utilisé pour exposer la pellicule, l'homogénéité de l'exposition du dispositif d'exposition utilisé pour exposer la pellicule, la liberté de lumière diffusée, les bruits RMS, le rapport signal/bruit, ou la ligne caractéristique de la modulation d'exposition du dispositif d'exposition utilisé pour exposer la pellicule.
